# FASCICULE DE BREVET EUROPEEN

(11) **EP 1 035 081 B1**
(45) Date de publication et mention de la délivrance du brevet: **21.08.2002**
(21) Numéro de dépôt: 00400560.9
(22) Date de dépôt: 02.03.2000
(51) Int. Cl.: C03B 37/012, C03B 37/014

(54) **Procédé de fabrication d'une préforme de fibre optique avec depot externe de silice éventuellement dopée**
Verfahren zum Herstellen einer Vorform für optische Fasern durch Aussenabscheidung von gegebenfalls dotiertem Siliciumoxid
Process for manufacturing an optical fibre preform by external deposition of silica, optionally doped

(30) Priorité: 08.03.1999 FR 9902815
(43) Date de publication de la demande: 13.09.2000
(73) Titulaire: ALCATEL, 75008 Paris (FR)
(72) Inventeur: Ripoche, Pierre, 45300 Pithiviers (FR); Drouart, Alain, 92000 Nanterre (FR); Gouez, Benoit, 78260 Acheres (FR)
(74) Mandataire: Lamoureux, Bernard

(56) Documents cités:
- EP-A- 0 440 130
- EP-A- 0 450 465
- EP-A- 0 719 738
- EP-A- 0 875 489
- FR-A- 2 446 264

## Description

La présente invention concerne un procédé de fabrication d'une préforme de fibre optique comprenant une étape de dépôt externe de silice éventuellement dopée par au moins un composé dopant, par injection à l'aide d'au moins un, de préférence d'un, moyen d'injection d'au moins un composé, qui est ladite silice ou un précurseur de ladite silice, à proximité d'une zone de chauffage créée par un moyen de chauffage, ladite étape comprenant au moins une passe selon l'axe longitudinal de la préforme du moyen d'injection et du moyen de chauffage. Elle concerne également la préforme obtenue par ce procédé et la fibre optique fabriquée par fibrage à partir de cette préforme

La fabrication de la préforme qui est destinée à fabriquer une fibre optique par fibrage, à partir d'une autre préforme dite primaire, laquelle comprend la partie optiquement guidante de la fibre optique issue de ladite préforme, par une technique de dépôt externe, latéral, telle que la technique de recharge plasma est aussi connue, et décrite par exemple dans la demande de brevet EP-A1-0.450.465.

Les caractéristiques optogéométriques d'une fibre optique déterminent des caractéristiques de transmission. Elles incluent la géométrie de la fibre, notamment les surfaces des différentes parties concentriques de la fibre, en coupe transversale, et les caractéristiques optiques de ces différentes parties. Ces caractéristiques optogéométriques sont issues de celles de la préforme à partir de laquelle est fabriquée la fibre optique.

La demande de brevet EP-A1-0.719.738 décrit un procédé d'obtention de préforme de fibre optique employant la recharge plasma, c'est-à-dire un procédé de dépôt externe employant comme moyen de chauffage une torche plasma, tel que l'on injecte dans ladite torche de la silice éventuellement dopée généralement sous forme de grains de silice, fournissant une préforme aux propriétés optogéométriques améliorées, en ce que l'une au moins des passes de recharge plasma est modulée en vue d'améliorer les propriétés optogéométriques de la préforme. Ladite passe de recharge modulée est l'une des dernières passes de recharge ; lors des passes non modulées, l'épaisseur de la couche de recharge déposée est sensiblement constante le long de la partie utile de la préforme. Le processus de recharge modulé consiste principalement en une modification axiale contrôlée de l'un au moins des paramètres de la recharge plasma, dont notamment et de préférence le débit de grains de recharge. Ladite modification axiale comprend une évaluation d'écarts axiaux de diamètre de la préforme et une modification axiale dudit paramètre dans un sens tel que ladite passe de recharge modulée réduira lesdits écarts axiaux de diamètre. En d'autres termes, en fonction d'écarts axiaux de diamètre préalablement déterminés, la passe de recharge est modulée et ajoute - ou retranche - au diamètre de la préforme de façon à ce que lesdits écarts soient plus faibles - voire annulés - après la passe de recharge.

Mais dans la demande de brevet EP-A1-0.719.738, le rendement du dépôt externe n'est pas optimisé : en effet le moyen d'injection, de grains dans ce cas, est positionné par rapport à la torche plasma de manière définitive pendant toute la durée dudit dépôt externe. Or le moyen de chauffage qu'est la troche plasma n'agit pas de manière symétrique par rapport à son axe sur les particules ou les gaz réactifs sortant du moyen d'injection principalement en raison de la circulation en vortex des gaz plasma à l'intérieur et en sortie de la torche. Par suite, dans le cas d'un procédé de dépôt externe alternant des passes de dépôt dans les deux sens, la position du moyen d'injection est typiquement selon l'art antérieur l'objet d'un compromis. On le place dans une position intermédiaire entre la position optimisée dans un sens de translation de la préforme et la position optimisée dans l'autre sens de translation de la préforme. Par conséquent le dépôt externe n'est pas optimisé, notamment au niveau du rendement de dépôt ; en effet, les grains ou les gaz réactifs sortant du moyen d'injection et n'ayant pas réagi dans la zone de chauffage du moyen de chauffage, se trouvent purement et simplement éliminés sans avoir pu réagir.

D'autre part, il est difficile avec un tel procédé d'effectuer le dépôt de dopant(s) tel le fluor avec certains taux d'incorporation dans la préforme. En effet, il peut arriver que la position du moyen d'injection ne permette pas d'obtenir une cinétique correcte des réactions de dépôt des réactifs dopés, principalement en termes de température et de distance à parcourir pour les réactifs sortant du moyen d'injection lorsque lesdits réactifs sont gazeux. Ainsi par exemple dans le cas du fluor celui-ci va être trop réactif et, au lieu de permettre le dépôt sur la préforme de silice et de composé fluoré, il va se former un composé SiF₄ indésirable qui ne s'incorpore pas dans la préforme. Au pire non seulement le dopant fluor ne s'incorpore pas dans la préforme, mais il gêne voire il empêche le dépôt de silice sur la préforme.

Dans le cadre de la technologie de dépôt en OVD (acronyme de "Outside Vapor Deposit"), où l'on produit un dépôt externe de silice éventuellement dopée par une succession de passes de dépôt externe de suies en présence du moyen de chauffage qui est génaralement un chalumeau oxyhydrique, la vitrification ayant lieu postérieurement à un tel dépôt généralement au moyen d'un four, il se pose aussi le problème de l'optimisation du dépôt externe et le problème du dépôt de certains dopants dans certaines conditions. On peut aussi envisager de réaliser un dépôt OVD en employant comme moyen de chauffage une torche plasma au lieu du chalumeau oxyhydrique.

Le procédé selon l'invention vise principalement à augmenter le rendement de dépôt du procédé de dépôt externe, en optimisant la position du (ou des) moyen(s) d'injection par rapport au moyen de chauffage. Il vise aussi à permettre dans de bonnes conditions le dépôt de dopant(s) simultanément au dépôt de silice.

A cet effet, le procédé selon l'invention est caractérisé en ce que, durant au moins l'une desdites passes, de préférence durant pratiquement tout le dépôt, l'on règle les positions relatives du (ou des) moyen(s) d'injection et du moyen de chauffage de sorte que la silice éventuellement dopée se dépose au niveau de la zone de chauffage quelle que soit la position dudit moyen chauffage.

Dans le cas d'une vitrification directe où l'on opère un dépôt de suies de silice éventuellement dopée et simultanément une vitrification desdites suies, il est très important d'obtenir une bonne qualité de préforme, et en particulier de ne pas incorporer de bulles dans la préforme. Tout en améliorant de façon notable le rendement de dépôt de silice, généralement de 20 à 30% par rapport à une position de compromis pour la localisation du moyen d'injection, le procédé selon l'invention présente l'avantage de permettre l'obtention d'un dépôt de qualité, essentiellement exempt de bulles

Le procédé selon l'invention présente aussi l'avantage de permettre, principalement dans le cas de l'injection de réactifs gazeux, l'obtention de certains niveaux de dopants présents dans la silice déposée par recharge, ce qu'un positionnement standard du moyen d'injection permet mal voire ne permet pas du tout.

Avantageusement, le réglage se fait à chaque changement de passe.

Ainsi, le procédé selon l'invention a l'avantage de permettre, principalement dans le cas de dépôt de grains dans les deux sens de la passe de recharge, à qualité de dépôt constante, une augmentation de la vitesse de dépôt des particules se déposant sur la préforme en couche de recharge latérale par rapport au procédé consistant à fixer le moyen d'injection à une position déterminée pendant toute la durée de la recharge.

Selon un mode de réalisation de l'invention, lorsque le moyen de chauffage a son axe principal dans un plan sensiblement perpendiculaire à l'axe longitudinal de la préforme, alors le moyen d'injection a son axe principal faisant un angle donné et fixe avec l'axe du moyen de chauffage et situé dans un plan sensiblement perpendiculaire à l'axe longitudinal de la préforme, et le déplacement relatif du moyen d'injection et du moyen de chauffage l'un par rapport à l'autre se fait dans une direction parallèle à l'axe longitudinal de la préforme.

Dans cette configuration, les orientations des axes principaux du moyen d'injection et du moyen de chauffage sont classiques du dépôt externe de silice éventuellement dopée, principalement dans le cas de la recharge plasma, et le procédé selon l'invention peut s' adapter aisément aux dispositifs existants. Le déplacement relatif du moyen d'injection et du moyen de chauffage s'effectue tout en conservant les axes desdits moyens dans un plan perpendiculaire à l'axe longitudinal de la préforme et avec un angle constant entre lesdits axes. Ainsi, il est facile d'ajouter l'automatisation de la position relative du moyen d'injection et du moyen de chauffage aux dispositifs existants.

Le moyen de chauffage selon l'invention est généralement une torche plasma, principalement dans le cas de la technologie plasma, mais aussi dans le cas de la technologie dite OVD.

Dans le cas de la présence d'au moins deux moyens d'injection, ce qui précède s'applique à chacun des moyens d'injection. Généralement dans un tel cas, les moyens d'injection sont situés dans un même plan sensiblement perpendiculaire à l'axe longitudinal de la préforme.

Dans le cas d'un dépôt de silice non dopée, que ce soit par injection de grains ou par injection de gaz réactifs, le positionnement du moyen d'injection, qui est dans un tel cas principalement fonction du sens de translation de la préforme par rapport au moyen de chauffage, est généralement ajusté en continu au fur et à mesure de la fabrication de la préforme. Ainsi il peut se faire par mesure du diamètre en continu, une telle mesure étant décrite dans la demande de brevet EP-A1-0.719.738 dans le cas où le moyen de chauffage est une torche plasma. L'évaluation de la position du moyen d'injection selon l'invention peut aussi être ajustée par étalonnage sur des préformes qui servent de préformes d'essais.

Dans le cas d'un dépôt de silice dopée, le plus souvent par injection de gaz réactifs, le positionnement du moyen d'injection se fait généralement par étalonnage sur des préformes qui servent de préformes d'essais. En effet, un tel positionnement est dans un tel cas principalement fonction du sens de translation de la préforme par rapport au moyen de chauffage et aussi du dopage à obtenir à diamètre de préforme donné selon le profil d'indice de réfraction voulu. Pour l'étalonnage, il faut donc, par une ou deux préformes d'essais, évaluer différentes positions du moyen d'injection par rapport au moyen de chauffage, en fonction de la vitesse de translation, à profil d'indice de réfraction donné.

L'invention sera mieux comprise et d'autres caractéristiques et avantages apparaîtront à la lecture de la description qui va suivre, donnée à titre non limitatif, par référence aux figures 1 à 5.

La figure 1 représente de façon très schématique un dispositif de recharge plasma dans lequel peut être mis en oeuvre le procédé de l'invention.

La figure 2 représente une vue schématique selon la ligne I-I (voir figure 1) de la position des différents éléments du dispositif selon la figure 1, dans une position de compromis selon l'art antérieur, dans le cas d'une translation gauche de la préforme 3 par rapport à la buse 5 et à la torche 4.

La figure 3 représente une vue schématique selon la ligne I-I (voir figure 1) de la position des différents éléments du dispositif selon la figure 1, dans une position de compromis selon l'art antérieur, dans le cas d'une translation droite de la préforme 3 par rapport à la buse 5 et à la torche 4. La différence avec la figure 2 est le sens de ladite translation.

La figure 4 représente une vue schématique selon la ligne I-I (voir figure 1) de la position des différents éléments du dispositif selon la figure 1, dans une position optimisée selon l'invention, dans le cas d'une translation gauche de la préforme 3 par rapport à la buse 5 et à la torche 4.

La figure 5 représente une vue schématique selon la ligne I-I (voir figure 1) de la position des différents éléments du dispositif selon la figure 1, dans une position optimisée selon l'invention, dans le cas d'une translation droite de la préforme 3 par rapport à la buse 5 et à la torche 4. La différence avec la figure 4 est le sens de ladite translation.

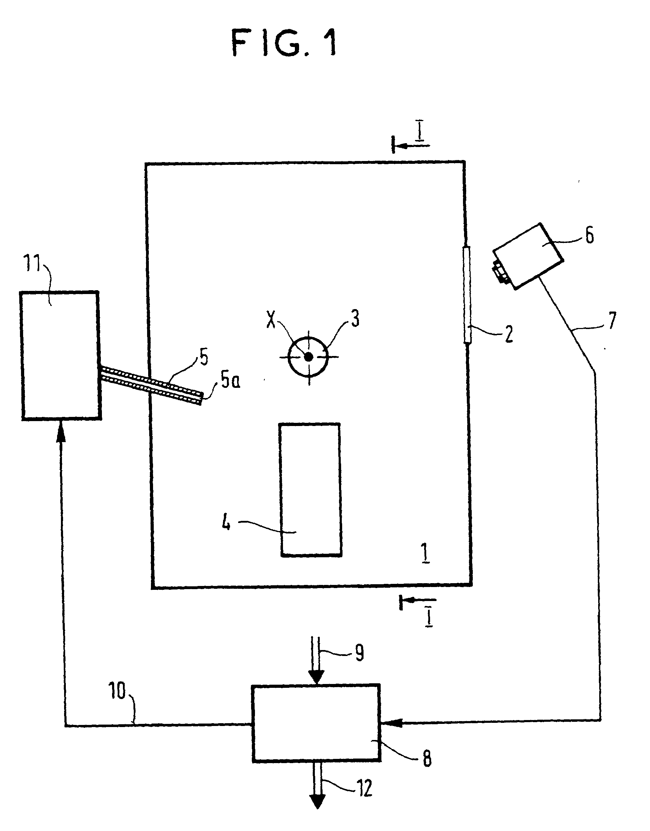

La figure 1 représente de façon très schématique un dispositif de recharge plasma, comprenant une enceinte 1, pourvue d'une fenêtre transparente 2, une préforme 3 vue de bout, vers laquelle sont dirigées une torche à plasma 4, qui représente le moyen de chauffage selon l'invention, et une buse d'alimentation en grains de recharge 5, d'orifice 5a, qui représente le moyen d'injection selon l'invention. A l'extérieur de l'enceinte 1, une caméra CCD 6, disposée derrière la fenêtre 2, est pointée sur la préforme 3 d'axe longitudinal X. Elle fournit une mesure du diamètre de la préforme, à l'endroit où elle est pointée, sous la forme d'une valeur transmise par une liaison 7 à un dispositif 8 de commande du processus de recharge. Le dispositif 8 reçoit, par une liaison multiple 9, d'autres indications sur des conditions du processus de recharge. Sous l'effet d'un programme interne de conduite du processus de recharge, le dispositif 8 fournit, à débit de grains constant, sur une liaison de sortie 10 alimentant un dispositif de commande 11, une valeur de commande du positionnement de la buse 5 par rapport à la torche 4 et à la préforme 3, qui positionne en conséquence la buse 5 par déplacement de ladite buse 5 le long d'un axe parallèle à l'axe longitudinal X de la préforme 3. La valeur de référence est celle pour laquelle la buse 5 et la torche 4 sont situées dans un même plan sensiblement perpendiculaire à l'axe de la préforme. Le dispositif 8 fournit aussi, sur une liaison multiple de sortie 12, d'autres valeurs de commande déterminant d'autres aspects du processus de commande.

Tous les éléments du dispositif illustré par la figure 1 sont bien connus de l'homme du métier. D'autres, qui ne sont pas représentés, sont également bien connus. C'est ainsi que des moyens de support de la préforme 3, avec entraînement en rotation et en translation, un chariot de support de la torche à plasma 4 et de la buse 5, avec entraînement en translation, parallèlement à l'axe longitudinal de la préforme 3, des moyens d'évaluation de la position angulaire de la préforme 3 et de la position longitudinale du chariot sont par exemple décrits dans la demande de brevet européen EP-A1-0.440.130. Selon l'invention, le chariot de support de la buse 5 et de la torche 4 comprend aussi un moyen interne de support de la buse 5 avec entraînement en translation, de façon à positionner la buse 5 par rapport à la torche 4. Tous ces moyens permettent de façon connue d'éloigner la préforme 3 de la torche 4 au fur et à mesure du grossissement de la préforme 3. Des moyens permettant de pointer la caméra 6 en des endroits successifs de la préforme 3 dans une passe de mesure, qui pourraient prendre la forme d'un second chariot au déplacement couplé avec celui du premier chariot, appartiennent également à la technique connue.

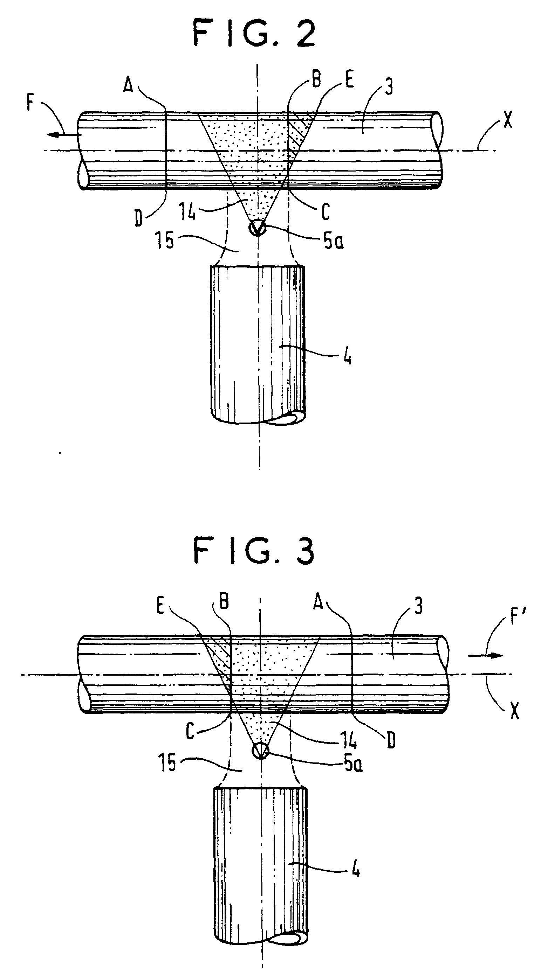

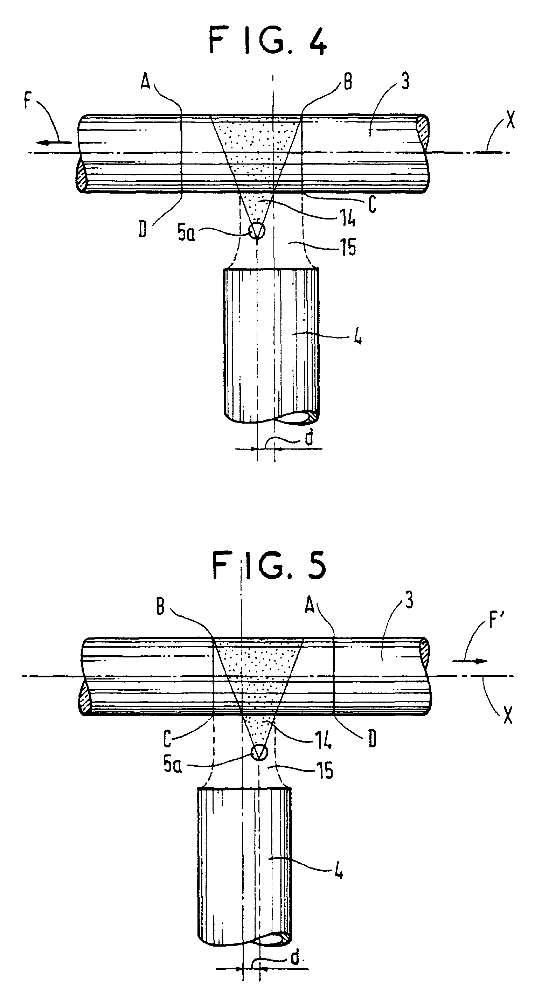

La recharge plasma s'opère par passes, de droite à gauche, puis de gauche à droite, au cours desquelles la torche à plasma 4 et la buse 5 balaient la longueur de la préforme 3. De préférence le changement de position de la buse 5 par rapport à la torche 4, selon le procédé de l'invention, se produit à chaque changement de sens de la translation de la torche 4 par rapport à la préforme 3, en fin de passe. Typiquement dans le cas des figures 2 et 3, qui seront décrites ci-après, selon l'art antérieur, le positionnement de la buse 5 par rapport à la torche 4 est fixe et donc identique quel que soit le sens de la translation de la préforme 3 par rapport à la torche 4, pour toute passe. Dans le cas des figures 4 et 5, qui seront décrites ci-après, selon l'invention, le positionnement de la buse 5 est différent pour chaque sens de la translation de la préforme 3 par rapport à la torche 4, et ce positionnement est modifié à chaque changement de sens, en fin de passe. De préférence, ce positionnement est le même pour un sens de translation donné, mais ce positionnement peut aussi varier au cours du processus en étant asservi au diamètre de la préforme.

Tout le processus de commande est optimisé pour obtenir un rendement important de la quantité de dépôt de silice, à vitesse de translation donnée et pour un profil d'indice de réfraction de la recharge donné. Simultanément la caméra 6 opère une passe de mesure, fournissant des valeurs successives du diamètre de la préforme 3 sur toute sa longueur.

La figure 2 représente une vue schématique de la position des différents éléments du dispositif selon la figure 1, dans une position de compromis selon l'art antérieur, dans le cas d'une translation gauche (flèche F) de la préforme 3 par rapport à la buse 5 et à la torche 4. Le sens de translation de la préforme 3 est indiqué par la flèche F. La buse 5 est simplement représentée schématiquement par son orifice 5a. On voit un cône 14 de dépôt des particules ou des gaz réactifs sortant de la buse 5, ainsi qu'un plasma 15 issu de la torche à plasma 4. On a indiqué par la zone ABCD une zone chaude de la préforme 3. On voit alors que le cône 14 déborde de la zone chaude ABCD, et il existe une zone froide BCE, hachurée sur la figure 2, dudit cône 14. Comme il a été expliqué précédemment un tel dépôt sur zone froide présente l'inconvénient de diminuer le rendement du dépôt voire de l'empêcher dans le cas où l'on veut injecter certains dopants.

La figure 3 représente une vue schématique de la position des différents éléments du dispositif selon la figure 1, dans une position de compromis selon l'art antérieur, dans le cas d'une translation droite (flèche F') de la préforme 3 par rapport à la buse 5 et à la torche 4. Le sens de translation de la torche est indiqué par la flèche F'. On voit de même que sur la figure 2 le cône 14 de dépôt des particules ou des gaz réactifs sortant de la buse 5 par l'orifice 5a, ainsi que le plasma 15 et la zone ABCD, zone chaude de la préforme 3. Le cône 14 déborde de la zone chaude ABCD, et il existe une zone froide BCE.

La figure 4 représente une vue schématique de la position des différents éléments du dispositif selon la figure 1, dans une position optimisée selon l'invention, dans le cas d'une translation gauche de la préforme 3 par rapport à la buse 5 et à la torche 4. On appelle aval de la torche la partie de la torche qui a déjà subi le dépôt au cours de la passe représentée. La buse 5 est telle que son axe est à une distance d de l'axe de la torche 4, en aval par rapport au sens de translation de la préforme 3 par rapport à la torche 4. Par suite le cône 14 de dépôt des particules ou des gaz sortant de la buse 5 par l'orifice 5a est présent totalement au niveau de la préforme 3 dans la zone chaude ABCD de la préforme 3. Il n'y a pas de zone froide.

La figure 5 représente une vue schématique de la position des différents éléments du dispositif selon la figure 1, dans une position optimisée selon l'invention, dans le cas d'une translation droite de la préforme 3 par rapport à la buse 5 et à la torche 4. La buse 5 est telle que son axe est à une distance d de l'axe de la torche 4, égale à la distance d représentée sur la figure 4, en aval par rapport au sens de translation de la préforme 3 par rapport à la torche 4. Par suite le cône 14 de dépôt des particules ou des gaz sortant de la buse 5 par l'orifice 5a est présent totalement au niveau de la préforme 3 dans la zone chaude ABCD de la préforme 3. Il n'y a pas de zone froide. Plus généralement, le moyen de chauffage n'est pas à symétrie cylindrique. Alors la buse 5 est telle que son axe est à une distance d', différente de la distance d représentée sur la figure 4, de l'axe de la torche 4, en aval par rapport au sens de translation de la préforme 3 par rapport à la torche 4.

La description précédente a été donnée dans le cas où le déplacement relatif du moyen de chauffage qu'est la torche 4 et du moyen d'injection qu'est la buse 5 est effectué par déplacement du moyen d'injection par rapport au moyen de chauffage. Bien entendu il est aussi possible dans le cadre de l'invention d'effectuer à l'inverse le déplacement du moyen de chauffage par rapport au moyen d'injection, avec un résultat sensiblement identique.

Bien entendu le procédé selon l'invention ne se limite pas aux représentations décrites ci-dessus. En particulier, il est utilisable pour les procédés de recharge plasma, mais aussi pour d'autres procédés de recharge tel que l'OVD.

## Revendications

1. Procédé de fabrication d'une préforme (3) de fibre optique comprenant une étape de dépôt externe de silice éventuellement dopée par au moins un composé dopant, par injection à l'aide d'au moins un moyen d'injection (5) d'au moins un composé, qui est ladite silice ou un précurseur de ladite silice, à proximité d'une zone de chauffage créée par un moyen de chauffage (4), ladite étape comprenant au moins une passe selon l'axe longitudinal (X) de la préforme (3) du moyen d'injection (5) et du moyen de chauffage (4), **caractérisé en ce que**, durant au moins une passe, l'on règle les positions relatives du moyen d'injection (5) et du moyen de chauffage (4) de sorte que la silice éventuellement dopée se dépose au niveau de la zone de chauffage quelle que soit la position dudit moyen de chauffage (4).

2. Procédé selon la revendication 1 tel que le réglage se fait à chaque changement de passe.

3. Procédé selon l'une des revendications 1 ou 2 tel que, lorsque le moyen de chauffage (4) a son axe principal dans un plan sensiblement perpendiculaire à l'axe longitudinal (X) de la préforme (3), alors le moyen d'injection (5) a son axe principal faisant un angle donné et fixe avec l'axe du moyen de chauffage et situé dans un plan sensiblement perpendiculaire à l'axe longitudinal (X) de la préforme (3), et le déplacement relatif du moyen d'injection (5) et du moyen de chauffage (4) l'un par rapport à l'autre se fait dans une direction parallèle à l'axe longitudinal (X) de la préforme (3).

## Patentansprüche

1. Verfahren zur Herstellung einer Vorform (3) einer optischen Faser mit einem Schritt zur Außenabscheidung von gegebenenfalls mit wenigstens einer Dotierverbindung dotiertem Siliciumdioxid durch Injektion mithilfe wenigstens eines Injektionsmittels (5) wenigstens einer Verbindung, welche das Siliciumdioxid oder ein Vorläufer des Siliciumdioxids ist, nahe einer durch ein Heizmittel (4) geschaffenen Heizzone, wobei der Schritt wenigstens einen Durchlauf in der Längsachse (X) der Vorform (3) des Injektionsmittels (5) and des Heizmittels (4) aufweist, **dadurch gekennzeichnet, dass** während des wenigstens einen Durchlaufs die relativen Positionen des Injektionsmittels (5) und des Heizmittels (4) so eingestellt werden, dass das gegebenenfalls dotierte Siliciumdioxid auf Höhe der Heizzone abgeschieden wird, unabhängig davon welche Position das Heizmittel (4) hat.

2. Verfahren nach Anspruch 1, bei welchem die Einstellung bei jedem Wechsel des Durchlaufs erfolgt.

3. Verfahren nach einem der Ansprüche 1 oder 2, bei welchem das Heizmittel (4) seine Hauptachse in einer Ebene hat, die im wesentlichen senkrecht zur Längsachse (X) der Vorform (3) ist, während das Injektionsmittel (5) eine Hauptachse hat, die einen gegebenen und festen Winkel zur Achse des Heizmittels einnimmt und sich in einer Ebene befindet, die im wesentlichen senkrecht zur Längsachse (X) der Vorform (3) ist, und die relative Versetzung des Injektionsmittels (5) und des Heizmittels (4) zueinander in einer Richtung erfolgt, die parallel zur Längsachse (X) der Vorform (3) ist.

## Claims

1. Method of fabricating an optical fibre preform (3) including a step of outside deposition of silica possibly doped with at least one dopant by injecting, with the aid of at least one injector means (5), at least one substance in the form of said silica or a precursor of said silica in the vicinity of a heating area created by heating means (4), said step including at least one pass of the injector means (5) and heating means (4) along the longitudinal axis of the preform (3), **characterized in that**, during one pass, the relative positions of the injector means (5) and the heating means (4) are adjusted so that the silica possibly doped is deposited in the heated area regardless of the position of said heating means (4).

2. Method according to claim 1 wherein the adjustment is carried out between each pass and the next.

3. Method according to either of claims 1 and 2 wherein the heating means (4) have a main axis in a plane substantially perpendicular to the longitudinal axis (X) of the preform (3), the injector means (5) have a main axis at a fixed angle to the axis of the heating means in a plane substantially perpendicular to the longitudinal axis (X) of the preform (3) and the injector means (5) and the heating means (4) move relative to each other in a direction parallel to the longitudinal axis (X) of the preform (3).
